# EUROPÄISCHE PATENTSCHRIFT

(11) **EP 3 166 089 B1**
(45) Veröffentlichungstag und Bekanntmachung des Hinweises auf die Patenterteilung: **06.04.2022**
(21) Anmeldenummer: 16196496.0
(22) Anmeldetag: 31.10.2016
(51) Int. Cl.: G07F 11/26

(54) **RÜCKNAHMEVORRICHTUNG FÜR LEERGUT**
DEVICE FOR RETURNING EMPTY BOTTLES
DISPOSITIF DE REPRISE DE BOUTEILLES CONSIGNÉES

(30) Priorität: 03.11.2015 DE 102015221497
(43) Veröffentlichungstag der Anmeldung: 10.05.2017
(73) Patentinhaber: Sielaff GmbH & Co. KG Automatenbau Herrieden, 91567 Herrrieden (DE)
(72) Erfinder: Deeg, Joachim, 91632 Wieseth (DE)
(74) Vertreter: Isarpatent

(56) Entgegenhaltungen:
- EP-A1- 0 266 627
- WO-A1-2005/069233
- DE-A1-102010 017 090
- GB-A- 1 300 653
- US-A1- 2004 231 960
- US-A1- 2012 173 014

## Beschreibung

### GEBIET DER ERFINDUNG

Die vorliegende Erfindung betrifft eine Rücknahmevorrichtung für Leergut, insbesondere Kisten-, Flaschen- und/oder Dosenleergut.

### TECHNISCHER HINTERGRUND

Pfandrücknahmeautomaten zur Rücknahme von Flaschen und Dosen als Pfandgut erfordern eine regelmäßige Betreuung und Reinigung. Dieser Aufwand wird aus Betreibersicht als zusätzliche, unnötige Belastung im Tagesgeschäft angesehen.

In der EP 1 150 257 A1 ist ein Flaschen-Rücknahmeautomat offenbart, welcher im Wesentlichen aus einer einer Transportstrecke, einer Flaschenerkennungseinheit und einer Flaschenausgabeeinheit besteht. Die Transportstrecke ist durch eine rohrförmige Umhüllung von den sie umgebenden Bereichen des Rücknahmeautomaten abgekapselt. In den oberen Bereich dieser Umhüllung sind auf das Förderband und die Flanken gerichtete Düsen eingebunden über die ein Reinigungsmedium eingedüst wird. Auch im Bereich der sind Reinigungsdüsen und ggf. Reinigungsbürsten angeordnet.

Der Flaschen-Rücknahmeautomat hat jedoch den Nachteil, dass die Reinigungsdüsen oberhalb des Förderbands angeordnet sind und daher eine Reinigung des Förderbands nur dann erfolgt, wenn keine Flaschen auf dem Förderband transportiert werden, da sonst die Flaschen statt dem Förderband gereinigt werden. Gleiches gilt für das Vorsehen der Reinigungsbürsten.

Des Weiteren ist in der DE 10 2010 017 090 A1 eine Vorrichtung zum Reinigen eines Transportbandes offenbart. Die Vorrichtung weist dabei als wesentliche Bauteile eine Sprüheinheit, eine Wischeinheit mit einer profilierten und V-förmigen Wischlippe, einen Vorratsbehälter für eine Reinigungsflüssigkeit und einen Pneumatikbehälter auf.

Die Vorrichtung zum Reinigen eines Transportbandes hat jedoch den Nachteil, dass die Wischlippe schnell verschleißt und öfters ausgetauscht werden muss. Des Weiteren sammelt sich sehr schnell Schmutz an der Wischlippe an, welcher die Reinigungsleistung der Wischlippe erheblich beeinträchtigt und des Weiteren einen häufigen Austausch der schnell verschmutzenden Wischlippe erfordert. Des Weiteren kann durch das Ansammeln von Schmutz an der Wischerlippe diese das Transportband statt zu reinigen zusätzlich ungewollt verschmutzen.

Des Weiteren tritt bei Flaschen-Rücknahmeautomaten ein Verschmutzen insbesondere im Bereich des Aussortierens des Leerguts auf, was mit einem erheblichen Reinigungsaufwand verbunden ist.

Aus der WO 2005/069233 A1 ist ein Rücknahmeautomat bekannt, bei dem einer Fördereinrichtung eine weitere Fördereinrichtung nachgeordnet ist. Dabei ist ein mittels eines Motors schwenkbares Tor vorgesehen, das auf die nachgeschaltete Fördereinrichtung schwenkbar ist, um ein zurückzuführendes Objekt in eine Rückführeinrichtung zu leiten.

Die US 2004/0231960 A1 beschreibt eine Paddelumlenkeranordnung für ein Materialhandhabungssystem mit angetriebenem Riemen, wobei ein Arm mittels eines Aktuators in eine Umlenkposition stellbar ist und der Aktuator dem Arm bei Auftreffen eines Objekts erlaubt sich aus der Umlenkposition heraus zu bewegen und dann in die Umlenkposition zurückzukehren, um so zumindest teilweise den Einschlag zwischen dem Arm und dem Objekt zu dämpfen.

### ZUSAMMENFASSUNG DER ERFINDUNG

Vor diesem Hintergrund liegt der vorliegenden Erfindung die Aufgabe zugrunde, eine verbesserte Rücknahmevorrichtung für Leergut bereitzustellen.

Erfindungsgemäß wird diese Aufgabe durch eine Rücknahmevorrichtung mit den Merkmalen des Patentanspruchs 1 gelöst.

Die der vorliegenden Erfindung zugrunde liegende Erkenntnis/Idee besteht darin, dass durch die Anordnung der Abweisereinrichtung derart, dass die Abweisereinrichtung relativ zu der Außen- und Oberseite des oberen Bandabschnitts in eine Betriebsposition in das Transportband bei Bedarf gedreht werden kann, um ein Leergut von dem Transportband abzuleiten und zu entfernen, das Leergut auch bei einer Verschmutzung der Abweisereinrichtung problemlos aussortiert werden kann. Die Abweisereinrichtung fungiert lediglich als eine Art Gatter, welches das Leergut von dem Transportband umlenkt und von dem Transportband herunter, während sich das Transportband selbst problemlos währenddessen in der Transportrichtung weiterbewegen kann. Dadurch kann der Reinigungsaufwand an der Rücknahmevorrichtung und insbesondere der Abweisereinrichtung erheblich reduziert oder auf eine Reinigung der Abweisereinrichtung sogar verzichtet werden.

Vorteilhafte Ausgestaltungen und Weiterbildungen ergeben sich aus den weiteren Unteransprüchen sowie aus der Beschreibung unter Bezugnahme auf die Figuren der Zeichnung. Erfindungsgemäß ist der Motor zusätzlich über eine zugeordnete Kopplungseinrichtung mit der Umlenkrolle gekoppelt, beispielsweise ein Zahnradgetriebe oder ein Riemengetriebe.

Zudem ist die Abweisereinrichtung mittels eines weiteren Motors, z.B. eines Elektromotors, drehbar. Die Abweisereinrichtung kann mit dem Motor durch die zugeordnete Kopplungseinrichtung gekoppelt werden zum Drehen der Abweisereinrichtung zwischen der Ausgangsposition und der Betriebsposition.

Optional kann die Ausgangsposition und/oder die Betriebsposition zusätzlich durch einen zugeordneten Sensor detektierbar sein. Dies hat den Vorteil, dass so einfach und schnell festgestellt werden kann, wenn sich ein Leergut verklemmmt hat.

Erfindungsgemäß weist die Abweisereinrichtung ein Anschlagselement auf, welches in einer Führungsnut der Rücknahmevorrichtung in einem einem Befestigungsplattenelement führbar ist. Die beiden Enden der Führungsnut bilden jeweils einen Anschlag für das Anschlagelement. Dabei kann die Abweisereinrichtung in der Ausgangposition sein, wenn das Anschlagelement das eine Ende der Führungsnut erreicht hat und die Abweisereinrichtung in der Betriebsposition sein, wenn das Anschlagelement das andere Ende der Führungsnut erreicht hat. Dadurch kann zuverlässig verhindert werden, dass die Abweisereinrichtung über die gewünschte Position ungewollt hinaus gedreht werden kann.

Erfindungsgemäß sind die Umlenkrollen der Abweisereinrichtung an wenigstens einem Ende mit einer zugeordneten Halterungseinrichtung gekoppelt.

Die Halterungseinrichtung kann z.B. eine Halterungsplatte aufweisen, wobei die Halterungsplatte dabei zusätzlich als Versteifungsplatte ausgebildet ist.

Die Versteifungsplatte kann z.B. eine dreieckige oder im Wesentlichen dreieckig Form aufweisen, wobei die Spitze des Dreiecks weg von dem Abweiser-Transportband zeigt, während die Umlenkrollen an der der Spitze gegenüberliegenden Seite des Dreiecks angeordnet werden können. Dadurch kann die Stabilität und Steifigkeit der Abweisereinrichtung zusätzlich erhöht werden.

In einer erfindungsgemäßen Ausführungsform weist die Halterungseinrichtung eine Verstärkungsplatte auf, welche mit der Halterungsplatte und mit der zugeordneten Kopplungseinrichtung gekoppelt ist zum Drehen der Halterungseinrichtung und den mit der Halterungseinrichtung verbundenen Umlenkrollen und deren Abweiser-Transportband zwischen der Ausgangsposition und der Betriebsposition.

In einer weiteren erfindungsgemäßen Ausführungsform ist das Transportband als Endlosband ausgebildet und um zwei Umlenkrollen umlaufend angeordnet. Das Transportband weist den oberen Bandabschnitt und einen unteren Bandabschnitt auf. Das Transportband ist dabei mit einer Reinigungsvorrichtung versehen zum Reinigen einer Außenseite und/oder Innenseite des unteren Bandabschnitts. Dies hat den Vorteil, dass das Transportband jederzeit auch während des Transports von Leergut auf dem oberen Bandabschnitt gereinigt werden kann, so dass prinzipiell eine Reinigung, insbesondere automatische Reinigung, rund um die Uhr möglich ist. Während das verschmutze Transportband in Transport- oder Förderrichtung läuft können große Feststoffe über eine Leergut- oder Gebindeführende Rutsche automatisch abfallen, während an dem Transportband z.B. anhaftender Schmutz, wie klebrige Flüssigkeit, problemlos durch die Reinigungsvorrichtung entfernt werden kann. Mittels der Reinigungsvorrichtung können beispielsweise nach einer Laufzeit von ca. 5 Minuten selbst größte Verschmutzungen von der gesamten Lauffläche des Transportbandes entfernt werden. Die Reinigung durch die Reinigungsvorrichtung kann automatisch oder automatisiert z.B. zu einem bestimmten Zeitpunkt, in einem bestimmten Zeitintervall usw. und/oder manuell gestartet werden.

Gemäß einer erfindungsgemäßen Ausführungsform ist das Transportband durch die Reinigungsvorrichtung vorspannbar. Dies hat den Vorteil, dass einem Durchhängen des Transportbandes entgegengewirkt werden kann und dadurch die Betriebsweise der Rücknahmevorrichtung zusätzlich verbessert werden kann. Außerdem ergibt sich ein zusätzlicher verbesserter Kontakt zwischen Reinigungsvorrichtung und Transportband, was die Reinigungswirkung der Reinigungsvorrichtung weiter verbessert.

In einer anderen erfindungsgemäßen Ausführungsform weist die Reinigungsvorrichtung wenigstens eine äußere Reinigungsrolle, welche an der Außenseite des unteren Bandabschnitts angeordnet ist, und/oder wenigstens eine innere Reinigungsrolle auf, welche an der Innenseite des unteren Bandabschnitts angeordnet ist. Die jeweilige Reinigungsrolle ist dabei in Kontakt mit dem unteren Bandabschnitt angeordnet oder mit diesem z.B. durch einen Motor in Kontakt bringbar ausgebildet. Die wenigstens eine äußere und/oder innere Reinigungsrolle kann feststehend, durch einen Motor drehbar oder durch Kontakt mit dem unteren Bandabschnitt drehbar ausgebildet sein, je nach Funktion und Einsatzzweck.

In einer erfindungsgemäßen Ausführungsform weist die jeweilige Reinigungsrolle wenigstens eine Reinigungsstruktur auf, beispielsweise eine Bürstenstruktur, eine Noppenstruktur, eine Lippen- oder Wischerlippenstruktur, eine Vliesstruktur, und/oder eine Schwammstruktur.

In einer anderen erfindungsgemäßen Ausführungsform weist die Reinigungsvorrichtung wenigstens eine Reinigungsmittelauftrageeinrichtung auf zum Auftragen eines Reinigungsmittels, vorzugsweise eines flüssigen Reinigungsmittels oder Reinigungsnebels, wobei die Reinigungsmittelauftrageeinrichtung beispielsweise als Düse ausgebildet ist. Die Versorgung der Reinigungsmittelauftrageeinrichtung mit einem Reinigungsmittel, wie z.B. Wasser, kann beispielsweise über eine feste Zuleitung, z.B. Festwasserzuleitung, und wahlweise zusätzlich inklusive einem Ablauf oder Abfluss erfolgen und/oder beispielsweise mittels Kanistern usw..

Gemäß einer erfindungsgemäßen Ausführungsform trägt die wenigstens eine Reinigungsmittelauftrageeinrichtung ihr Reinigungsmittel auf die zugeordnete Außenseite und/oder Innenseite des unteren Bandabschnitts des Transportbandes auf. Dadurch können eine oder beide Seiten des Transportbands einfach jederzeit gereinigt werden.

In einer weiteren erfindungsgemäßen Ausführungsform trägt die wenigstens eine Reinigungsmittelauftrageeinrichtung ihr Reinigungsmittel auf wenigstens eine zugeordnete Reinigungsrolle auf. Dadurch kann auch die wenigstens eine zugeordnete Reinigungsrolle gereinigt und einer Schmutzansammlung von ansonsten anhaftendem oder klebrigem Schmutz entgegengewirkt werden.

In einer anderen erfindungsgemäßen Ausführungsform weist die Reinigungsvorrichtung einen Behälter auf zum Auffangen des zuvor durch die wenigstens eine Reinigungsmittelauftrageeinrichtung aufgetragene Reinigungsmittels. Der Behälter kann beispielsweise wenigstens einen zusätzlichen Ablauf aufweisen zum Abführen des gesammelten und insbesondere verschmutzten Reinigungsmittels. Der Behälter kann dabei beispielsweise fest installiert oder auswechselbar in der Rücknahmevorrichtung vorgesehen werden.

Gemäß einer erfindungsgemäßen Ausführungsform kann der Behälter und/oder der Auslass ein Sieb aufweisen. Das Sieb kann ebenfalls fest in dem Behälter bzw. dem Auslauf installiert oder austauschbar vorgesehen werden, je nach Funktion und Einsatzzweck.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine teilweise geschnittene Perspektivansicht eines Ausschnitt einer Rücknahmevorrichtung 1 für Leergut mit einem Transportband und seiner Reinigungsvorrichtung gemäß einer ersten Ausführungsform der Erfindung;
- Fig. 2: eine weitere Perspektivansicht der Rücknahmevorrichtung und des Transportbandes mit seiner Reinigungsvorrichtung gemäß Fig. 1;
- Fig. 3: einen Ausschnitt einer weiteren Ausführungsform der erfindungsgemäßen Rücknahmevorrichtung 1 für Leergut, welche eine Abweisereinrichtung gemäß einer weiteren Ausführungsform der Erfindung aufweist;
- Fig. 4: eine Draufsicht auf einen Ausschnitt des Transportbandes und der Abweisereinrichtung der Rücknahmevorrichtung gemäß Fig. 3;
- Fig. 5: ein Ausschnitt der Rücknahmevorrichtung in einer Perspektivansicht gemäß der Fig. 3 und 4, und
- Fig. 6: eine Perspektivansicht der Abweisereinrichtung gemäß der Fig. 3 bis 5.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

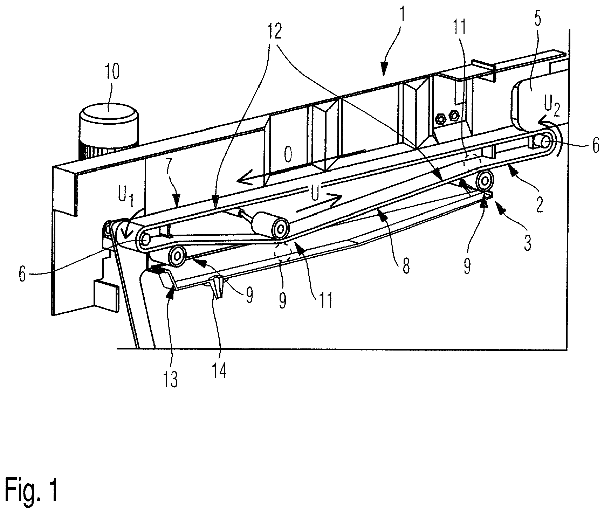

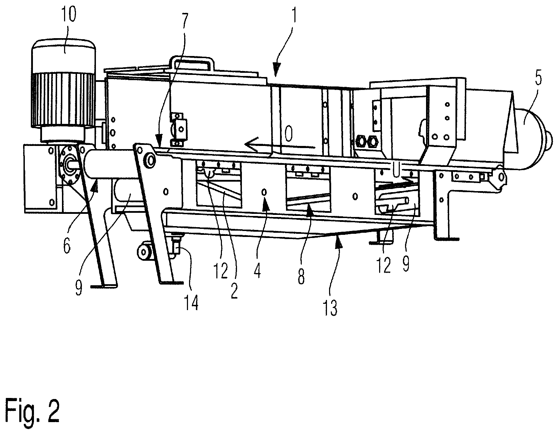

Fig. 1 zeigt in einer teilweise geschnittenen Perspektivansicht einen Ausschnitt einer Rücknahmevorrichtung 1 für Kisten-, Flaschen- und/oder Dosenleergut mit einem Transportband 2 und seiner Reinigungsvorrichtung 3 gemäß einer ersten Ausführungsform der Erfindung. Fig. 2 zeigt eine weitere Perspektivansicht der Rücknahmevorrichtung 1 und des Transportbandes 2 mit seiner Reinigungsvorrichtung 3 gemäß Fig. 1, wobei dabei Teile einer Abschirmung 4 des Transportbandes 2 und seiner Reinigungsvorrichtung 3 innerhalb der Rücknahmevorrichtung 1 gezeigt ist.

Eine Rücknahmevorrichtung 1 für Kisten-, Flaschen- und/oder Dosenleergut weist normalerweise wenigstens eine Leerguteingabeeinrichtung, eine Leerguterkennungseinrichtung und eine Leergutausgabeeinrichtung mit wenigstens einem Leergutausgang auf. Die Leerguterkennungseinrichtung ist dabei beispielsweise derart ausgebildet zu bestimmen, ob es sich bei dem Leergut um ein Pfandgut, z.B. eine Pfandflasche, Pfandkiste oder eine Pfanddose, um die Pfandart, z.B. eine Mehrwegflasche oder eine Einwegflasche usw., oder um ein Leergut ohne Pfand, handelt usw.. Des Weiteren kann die Leerguteinrichtung derart ausgebildet sein die Pfandhöhe zu bestimmen, wenn sie feststellt, dass es sich bei dem Leergut um ein Pfandgut handelt.

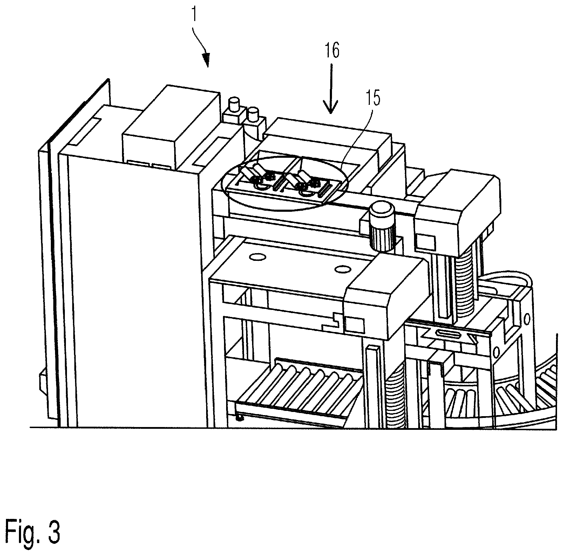

In einer bevorzugten erfindungsgemäßen Ausführungsvorrichtung, weist die Rücknahmevorrichtung 1 außerdem wenigstens eine Abweisereinrichtung zum Sortieren von Leergut auf, welche nachfolgend mit Bezug auf die Fig. 3 bis 6 näher beschrieben wird.

Zum Transport des Leerguts zwischen wenigstens zwei der vorgenannten Einrichtungen, d.h. der Leerguteingabeeinrichtung, der Leerguterkennungseinrichtung und der Leergutausgabeeinrichtung, ist wenigstens ein Transportband 2 vorgesehen. Ein solches Transportband 2 kann im Betrieb der Rücknahmevorrichtung 1 verschmutzt werden, beispielsweise durch auslaufende Flüssigkeit aus dem Leergut, wie z.B. Flaschen oder Dosen. Auf den in den Fig. 1 und 2 gezeigten Transportband 2 wird Leergut in Form von Kisten, Flaschen und/oder Dosen transportiert. Das Kisten-, Flaschen- und/oder Dosenleergut wird beispielsweise auf dem Transportband 2 liegend transportiert, wie durch die Flasche 5 in Fig. 1 angedeutet ist. Ein stehender Transport des Leerguts ist aber auch möglich.

Das Transportband 2 ist dabei als umlaufendes Band ausgebildet, welches über zwei Umlenkrollen 6 läuft. Die Drehrichtung der Umlenkrollen 6 ist dabei mit einem jeweiligen Pfeil U1, U2 in den Fig. 1 und 2 angedeutet. Dem entsprechend weist das Transportband einen ersten oder oberen Bandabschnitt 7, welcher sich in Transportrichtung bewegt, wie mit einem Pfeil O angedeutet ist, und einen unteren oder zweiten Bandabschnitt 8 auf, welcher sich in der der Transportrichtung entgegengesetzten Richtung, wie mit einem Pfeil U angedeutet ist, bewegt. Dabei ist wenigstens einer der Umlenkrollen 6 durch einen Motor 10 betätigbar oder drehbar, z.B. einen Elektromotor, wie in Fig. 1 und 2 gezeigt ist.

Die Reinigungsvorrichtung 3 zum Reinigen des Transportbandes 2 ist derart angeordnet und ausgebildet den unteren Bandabschnitt 8 zu reinigen, welcher entgegen der Transportrichtung läuft und somit im Betrieb der Rücknahmevorrichtung 1 nicht mit Leergut zum Transportieren bestückt ist. Dies hat den Vorteil, dass das Transportband 2 problemlos während des Betriebs und insbesondere auch während des Transports von Leergut auf dem oberen Bandabschnitt 7 gereinigt werden kann, durch Reinigen des unteren Bandabschnitts 8 währenddessen. Dadurch kann eine Reinigung des Transportbandes 2 nicht nur außerhalb der Betriebszeiten, z.B. in der Nacht, sondern jederzeit und insbesondere auch während der Betriebszeit und besonders im Beladungszustand des Transportbandes 2 erfolgen. Die Reinigungsvorrichtung 3 gemäß der Erfindung weist wenigstens eine äußere Reinigungsrolle 9 auf, welche an der Außenseite des unteren Bandabschnitts 8 feststehend oder drehbar und in Kontakt oder Kontakt bringbar mit dem unteren Bandabschnitt 8 angeordnet ist. Die äußere Reinigungsrolle 9 kann dabei drehbar gelagert und durch Kontakt mit dem unteren Bandabschnitt 8 durch diesen Bandabschnitt gedreht werden.

Zusätzlich oder alternativ kann die äußere Reinigungsrolle 9 auch motorisiert ausgebildet sein. Die äußere Reinigungsrolle 9 kann durch eine Motoreinrichtung drehbar und wahlweise zusätzlich mit dem Transportband 2, hier dem unteren Bandabschnitt 8, in Kontakt und/oder außer Kontakt bringbar ausgebildet sein. Die Drehgeschwindigkeit der äußeren Reinigungsrolle 9 und/oder der senkrechte Abstand der äußeren Reinigungsrolle 9 zu dem unteren Bandabschnitt 8 kann durch die Motoreinrichtung einstellbar sein. Dabei kann die Drehgeschwindigkeit der äußeren Reinigungsrolle 9 durch die Motoreinrichtung z.B. konstant sein oder variiert werden. Die Motoreinrichtung kann beispielsweise mit einer Steuerung ausgebildet oder gekoppelt zum Steuern der Drehgeschwindigkeit der äußeren Reinigungsrolle 9 und/oder des senkrechten Abstands der Reinigungsrolle 9 zu dem unteren Bandabschnitt 8.

Die äußere Reinigungsrolle 9 kann beispielsweise in Laufrichtung des unteren Bandabschnitts 8, d.h. in der zu der Transportrichtung entgegengesetzten Richtung, am Anfang oder Ende des unteren Bandabschnitts 8, wie in Fig. 1 und 2 gezeigt ist, oder z.B. in der Mitte des unteren Bandabschnitts 8 angeordnet sein.

Die zuvor gemachten Ausführungen zu der ersten äußeren Reinigungsrolle 9 gelten entsprechend für alle Reinigungsrollen, sowohl äußere wie innere Reinigungsrollen 9, 11, der erfindungsgemäßen Reinigungsvorrichtung 3, so dass hierzu für die weiteren Reinigungsrollen auf die Beschreibung zu der ersten äußeren Reinigungsrolle 9 verwiesen wird, um unnötige Wiederholungen zu vermeiden.

In dem in Fig. 1 und Fig. 2 gezeigten Ausführungsbeispiel ist eine zweite äußere Reinigungsrolle 9 ebenfalls an der Außenseite des unteren Bandabschnitts 8 vorgesehen. Die erste und zweite äußere Reinigungsrolle 9, 9 sind in Fig. 1 z.B. am Anfang und am Ende des unteren Bandabschnitts 8 vorgesehen.

Des Weiteren ist wenigstens eine weitere dritte innere Reinigungsrolle 11 an der Innenseite des unteren Bandabschnitts 8 vorgesehen, so dass das Transportband 2 nicht nur an seiner Außenseite sondern auch an seiner Innenseite gereinigt werden kann. Läuft beispielsweise Flüssigkeit aus Flaschen- oder Dosenleergut auf dem Transportband 2 aus, so kann diese Flüssigkeit auch auf die Unter- oder Innenseite des Transportbandes 2 gelangen, insbesondere wenn das Transportband 2 zusätzliche Öffnungen und/oder Spalte usw. aufweist. Die dritte oder innere Reinigungsrolle 11 kann dabei z.B. zwischen den beiden anderen äußeren Reinigungsrollen 9 angeordnet sein, wie in dem Ausführungsbeispiel in Fig. 1 gezeigt ist.

Die innere Reinigungsrolle 11 kann dabei einer der äußeren Reinigungsrollen 9, wie in Fig. 1 mit einer gestrichelten Linie angedeutet ist, gegenüberliegend angeordnet sein. Dabei sind die beiden gegenüberliegenden Reinigungsrollen 9, 11 jeweils mit der zugeordneten Außenseite bzw. Innenseite des unteren Bandabschnitts 8 in Kontakt oder zusätzlich gegen diesen angedrückt, um die jeweilige Seite des Bandabschnitts 8 zu reinigen.

Des Weiteren kann wenigstens eine der äußeren und/oder inneren Reinigungsrollen 9, 11 derart zu dem unteren Bandabschnitt 8 angeordnet sein, dass die Reinigungsrolle 9 bzw. 11 nicht nur mit dem zweiten Bandabschnitt 9 in Kontakt ist, um diesen zu reinigen, sondern auch um ein ungewolltes Durchhängen des Transportbands 2 zu verhindern und wahlweise zusätzlich das Transportband 2 zu spannen. Auf diese Weise kann ein späteres ungewolltes Durchhängen des Transportbandes 2 aufgrund z.B. von Alterung verhindert werden.

In dem in Fig. 1 gezeigten Ausführungsbeispiel wird das Transportband 2 durch die innere Reinigungsrolle 11, welche auf der Innenseite des unteren Bandabschnitts 8 angeordnet ist, zusätzlich gespannt. Die innere Reinigungsrolle 8 wird dazu versetzt, d.h. nach außen versetzt, zu dem ursprünglich parallel zu dem oberen Bandabschnitt 7 verlaufenden unteren Bandabschnitt 8 angeordnet. Der untere Bandabschnitt 8 verläuft somit nicht mehr parallel zu dem oberen Bandabschnitt 7 sondern entlang der nach außen versetzt angeordneten inneren Reinigungsrolle 11, wie in dem Ausführungsbeispiel in Fig. 1 gezeigt ist. Dadurch kann das Transportband 2 wahlweise zusätzlich gespannt werden und einem Durchhängen oder Nachlassen der Spannung des Transportbands 2 entgegengewirkt werden.

Zusätzlich oder alternativ kann das Transportband 2 auch durch wenigstens eine der äußeren Reinigungsrollen 9, welche auf der Außenseite des unteren Bandabschnitts 8 angeordnet sind, zusätzlich gespannt werden. Die jeweilige äußere Reinigungsrolle 9 wird dazu versetzt, d.h. nach innen versetzt, zu dem ursprünglich parallel zu dem oberen Bandabschnitt 7 verlaufenden unteren Bandabschnitt 8 angeordnet. Der untere Bandabschnitt 8 verläuft somit nicht mehr parallel zu dem oberen Bandabschnitt 7 sondern entlang der nach innen versetzt angeordneten äußeren Reinigungsrolle 9.

Wenigstens eine äußere und/oder innere Reinigungsrolle 9, 11 kann mit einer zusätzlichen Reinigungsstruktur z.B. einer Bürstenstruktur als Bürstenrolle, einer Noppenstruktur, einer Lippen- oder Wischerlippenstruktur, einer Vliesstruktur, z.B. rauen oder weichen Vliesstruktur, und/oder einer Schwammstruktur oder einer andere Reinigungsstruktur oder Kombination von Reinigungsstrukturen ausgebildet sein, zum Reinigen des Transportbandes 2.

Des Weiteren weist die Reinigungsvorrichtung 3 wenigstens eine Reinigungsmittelauftrageeinrichtung 12 auf. Die Reinigungsmittelauftrageeinrichtung 12 ist dabei derart angeordnet, ein Reinigungsmittel, z.B. pures Wasser oder mit einer zusätzlichen Reinigungssubstanz versetztes Wasser, auf die Innenseite und/oder die Außenseite des unteren Bandabschnitts 8 und wahlweise zusätzlich wenigstens eine der Reinigungsrollen 9, 11 aufzubringen zum Reinigen des Transportbandes 2 und wahlweise zusätzlich der wenigstens einen Reinigungsrolle 9, 11. Ebenso kann die Reinigungsmittelauftrageeinrichtung 12 auch in Laufrichtung des unteren Bandabschnitts 8 vor oder nach einer den Reinigungsrollen 9, 11 vorgesehen sein beispielsweise zum Aufweichen und/oder Lösen von Schmutz bevor der Schmutz durch die Reinigungsrolle 9 bzw. 11 entfernt wird oder zum Abspülen von durch die Reinigungsrolle 9 bzw. 11 entferntem oder gelösten Schmutz. Grundsätzlich können auch vor und nach einer jeweiligen Reinigungsrolle 9 bzw. 11 Reinigungsmittelauftrageeinrichtungen 12 vorgesehen werden beispielsweise zum Aufweichen und/oder Lösen von Schmutz vor der Reinigungsrolle 9 bzw. 11 und anschließendem Wegspülen von Schmutz nach der Reinigungsrolle 9 bzw. 11 und wahlweise zusätzlichen gleichzeitigen Reinigen der Reinigungsrolle 9 bzw. 11. Optional kann auch eine Reinigungsmittelauftrageeinrichtung 12 zum Reinigen einer zugeordneten Reinigungsrolle 9 bzw. 11 vorgesehen sein, so dass einem Verschmutzen der Reinigungsrolle 9 bzw. 11 selbst zusätzlich entgegengewirkt werden kann.

Die Reinigungsmittelauftrageeinrichtung 12 kann als Reinigungsdüse ausgebildet sein. Des Weiteren kann der Druck des mittels der Reinigungsmittelauftrageeinrichtung 12, z.B. Reinigungsdüse, auf das Transportband 2 und/oder eine zugeordnete Reinigungsrolle 9 bzw. 11 aufgetragene Reinigungsmittel derart eingestellt oder gesteuert werden, dass ein Sprühstrahl oder Sprühnebel auf das Transportband 2 bzw. die Reinigungsrolle 9 bzw. 11 aufbringbar ist.

In dem in Fig. 1 gezeigten Ausführungsbeispiel ist beispielsweise wenigstens eine erste oder äußere Reinigungsmittelauftrageeinrichtung 12 auf der Außenseite des unteren Bandabschnitts 8 und wenigstens eine zweite oder innere Reinigungsmittelauftrageeinrichtung 12 auf der Innenseite des unteren Bandabschnitts 8 angeordnet, so dass Reinigungsmittel auf die Innenseite und Außenseite des unteren Bandabschnitts 8 aufgebracht werden kann. Dadurch kann Schmutz auf der Innen- und Außenseite des unteren Bandabschnitts 8 entfernt werden.

Die wenigstens eine oder mehreren Reinigungsmittelauftrageeinrichtungen können derart angeordnet werden, dass das Transportband 2 aus z.B. unterschiedlichen Richtungen mit Reinigungsmittel, wie Wasser usw., besprüht werden kann. Dies kann z.B. über eine Ventilsteuerung erfolgen. Losgelöste Feststoffe können so mittels eines nachfolgend beschriebenen Siebs gesammelt werden.

Des Weiteren ist ein Behälter 13 unterhalb des Transportbandes 2 und dessen unteren Bandabschnitts 8 vorgesehen zum Aufnehmen von durch die jeweilige Reinigungsmittelauftrageeinrichtung 12 auf das Transportband 2 und gegebenenfalls eine jeweilige Reinigungsrolle 9 bzw. 11 aufgebrachtes Reinigungsmittel und den in dem Reinigungsmittel aufgrund der Reinigung des Bandes vorhandenen Schmutz.

Der Behälter 13 weist vorzugsweise wenigstens einen definierten Ablauf 14, z.B. ein Abflussrohr, zum Abführen des in dem Behälter 13 aufgefangenen verschmutzten Reinigungsmittels und Abführen des verschmutzen Reinigungsmittels beispielsweise an eine nicht dargestellte Reinigungsmittelaufbereitungseinrichtung oder an eine Reinigungsmittelentsorgungseinrichtung auf.

Wahlweise zusätzlich kann der Behälter 13 und/oder dessen wenigstens einer Ablauf 14 mit einem nicht dargestellten Sieb versehen sein zum Aufnehmen von z.B. losgelösten Feststoffen usw. in dem verschmutzen Reinigungsmittel.

Der Behälter 13 und/oder das wenigstens eine Sieb in dem Behälter oder Ablauf können sowohl jeweils fest eingebaut als auch entnehmbar in der Rücknahmevorrichtung 1 vorgesehen sein.

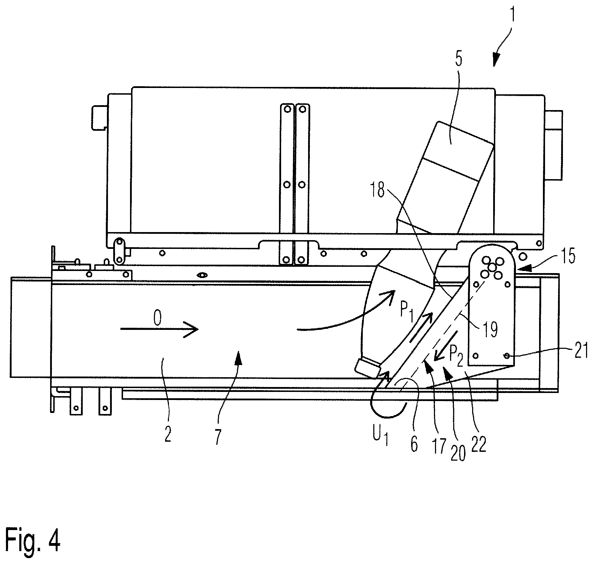

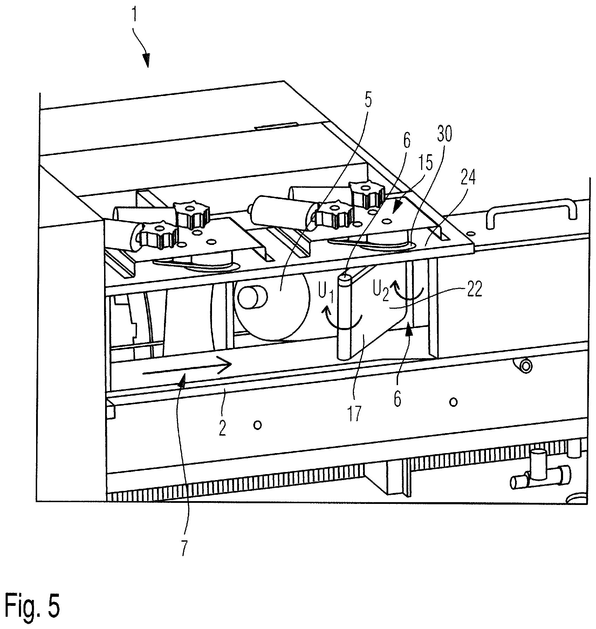

In Fig. 3 ist ein Ausschnitt einer weiteren Ausführungsform der erfindungsgemäßen Rücknahmevorrichtung 1 für Kisten-, Flaschen- und/oder Dosenleergut gezeigt, welche eine Abweisereinrichtung 15 aufweist. Die Rücknahmevorrichtung 1 kann dabei die zuvor mit Bezug auf die Fig. 1 und 2 beschriebene Reinigungsvorrichtung für wenigstens ein Transportband 2 oder ein nachfolgend beschriebenes Abweiser-Transportband der Rücknahmevorrichtung 1 aufweisen. Fig. 4 zeigt eine Draufsicht auf die Abweisereinrichtung 15 der Rücknahmevorrichtung 1 gemäß Fig. 3, Fig. 5 einen Ausschnitt der Rücknahmevorrichtung in einer Perspektivansicht gemäß Fig. 3 und 4, und Fig. 6 eine Perspektivansicht der Abweisereinrichtung 15 gemäß der Fig. 3 bis 5.

Die Rücknahmevorrichtung 1 weist, wie zuvor mit Bezug auf die Fig. 1 und 2 beschrieben wurde, normalerweise wenigstens eine Leerguteingabeeinrichtung, eine Leerguterkennungseinrichtung und eine Leergutausgabeeinrichtung mit wenigstens einem Leergutausgang auf. Zum Transport des Leerguts, z.B. einer Flasche 5, zwischen z.B. wenigstens zwei der genannten Einrichtungen ist wenigstens ein Transportband 2 vorgesehen.

In dem in Fig. 3 gezeigten Ausführungsbeispiel weist die Rücknahmevorrichtung 1 eine Abweisereinrichtung 15 auf.

Die Abweisereinrichtung 15 dient zum Sortieren oder Aussortieren von Leergut. Je nach aussortiertem Leergut wird dieses anschließend, wie zuvor in dem Ausführungsbeispiel in Fig. 1 und 2, einer Leergutweiterverarbeitungseinrichtung 16 zugeführt.

Eine Leergutweiterverarbeitungseinrichtung 16 ist beispielsweise eine in Fig. 3 gezeigte Presse oder ein Kompaktor, in welcher komprimierbares Leergut zusammengepresst wird, ein nicht dargestelltes Behältnis zum Aufnehmen von Mehrwegflaschen zum späteren Wiederaufbereiten der Mehrwegflaschen oder eine nicht dargestellte Reinigungsvorrichtung zum Reinigen von Mehrwegflaschen usw.. Die Erfindung ist auf die genannten Beispiele für Leergutweiterverarbeitungseinrichtungen 16 nicht beschränkt.

Das Leergut, z.B. eine Flasche 5, wird in eine Leergutaufnahme der Rücknahmeeinrichtung 1 eingeführt, beispielsweise stehend oder liegend, wie in Fig. 4 und 5 gezeigt ist. Das Leergut wird dabei in der Leerguterkennungseinrichtung der Rücknahmevorrichtung 1 zunächst erfasst und bestimmt, welcher Leergutweiterverarbeitungseinrichtung 16 es zugeführt wird. Die Leergutweiterverarbeitungseinrichtung 16 kann dabei Teil der Rücknahmevorrichtung 1 sein, wie die in Fig. 3 gezeigt Presse bzw. Kompaktor. Ebenso kann die Leergutweiterverarbeitungseinrichtung 16 auch mit dem zugeordneten Leergutausgang der Leergutausgabeeinrichtung der Rücknahmevorrichtung 1 koppelbar sein, z.B. ein Behälter zum Aufnehmen von Mehrwegflaschen, welche über den wenigstens einen Leergutausgang ausgegeben werden.

In dem in Fig. 4 und 5 gezeigten Ausführungsbeispiel wird das Leergut nach dem Passieren der Leerguterkennungseinrichtung zunächst auf einem Transportband 2 liegend transportiert, um durch die Abweisereinrichtung 15 sortieren oder aussortiert zu werden. Die Abweisereinrichtung 15 weist dabei ein Abweiser-Transportband 17 auf, welches senkrecht zu der Ober- und Außenseite des ersten oder oberen Bandabschnitts 8 des Transportbands 2 angeordnet ist. Das Transportband 2 ist in der Rücknahmevorrichtung 1 beispielsweise horizontal angeordnet und das Abweiser-Transportband 17 ist dem entsprechend vertikal dazu angeordnet, wie in den Fig. 4 und 5 gezeigt ist. Als Transportband 2 kann dabei das zuvor mit Bezug auf die Fig. 1 und 2 beschriebene Transportband 2 vorgesehen werden, welches wahlweise zusätzlich die ebenfalls zuvor mit Bezug auf die Fig. 1 und 2 beschriebene Reinigungsvorrichtung aufweist. Es kann aber auch jedes andere Transportband sowie wahlweise zusätzlich jede andere Reinigungsvorrichtung vorgesehen werden.

Wie in Fig. 4 und 5 gezeigt ist, ist das Abweiser-Transportband 17 ebenfalls als ein umlaufendes Band ausgebildet, welches über zwei Umlenkrollen 6 läuft. Die Drehrichtung der Umlenkrollen 6 ist dabei mit einem jeweiligen Pfeil u1, u2 in den Fig. 4 und 5 angedeutet. Dem entsprechend weist das Abweiser-Transportband 17 einen ersten Bandabschnitt 18, welcher, wenn das Abweiser-Transportband 17 in Richtung des Transportbandes 2 geschwenkt ist, sich in einer Abweiser-Transportrichtung bewegt, wie mit einem Pfeil P1 angedeutet ist, um ein auf dem Transportband 2 transportiertes Leergut von dem Transportband 2 herunter zu leiten oder zu entfernen. Der obere Bandabschnitt 7 des Transportbands 2 kann sich währenddessen weiter in seiner Transportrichtung bewegen, wie mit einem Pfeil O angedeutet ist. Durch die zusätzliche Bewegung des Abweiser-Transportbandes 17 kann die kinetische Energie des Leerguts außerdem unterstützt werden bzw. das Leergut schneller von dem Transportband 2 abgeführt und einer Leergutweiterverarbeitungseinrichtung 16 zugeführt werden.

Des Weiteren weist das Abweiser-Transportband 17 einen zweiten Bandabschnitt 19 auf, welcher, wenn das Abweiser-Transportband 17 in Richtung des Transportbandes 2 geschwenkt ist, sich in der der Abweiser-Transportrichtung entgegengesetzten Richtung, wie mit dem Pfeil P2 angedeutet ist, bewegt.

Sollte sich das Leergut ungewollt während des Ableitens von dem Transportband 2 durch das Abweiser-Transportband 17 verklemmen, so kann beispielsweise wenigstens der erste Bandabschnitt 18 des Abweiser-Transportbandes 17 entgegen der Abweiser-Transportrichtung oder der obere Bandabschnitt 7 des Transportbandes 2 entgegen der Transportrichtung bewegt werden. In diesem Fall kann das jeweils andere der beiden Bänder entweder ebenfalls entgegen der Transportrichtung mitbewegt werden oder stillstehen. Auf diese Weise kann ein verklemmtes Leergut leicht gelöst werden, ohne dass der Betrieb der Rücknahmevorrichtung 1 vollständig unterbrochen werden muss. Dabei kann in einem Ausführungsbeispiel der Erfindung eine Selbstbefreiung bei Verklemmen des Leerguts oder Gebindes in eine Steuerung oder Ansteuerung der Abweisereinrichtung der Rücknahmevorrichtung integriert werden. Beispielweise kann bei Verklemmen des Leerguts oder Gebindes die Abweisereinrichtung z.B. in die Betriebsposition bewegt oder geöffnet werden.

Das senkrecht angeordnete Abweiser-Transportband 17 hat des Weiteren den Vorteil, dass selbst im Falle einer Verschmutzung des Abweiser-Transportbandes 17 dieses Leergut trotzdem zuverlässig von dem Transportband 2 herunterleiten kann. Dadurch kann der Reinigungsaufwand an dem Abweiser-Transportband 17 entscheidend reduziert werden oder ist nicht mehr nötig. Für den entsprechenden Sortierweg schwenkt die Abweisereinrichtung bzw. deren Abweiser-Transportband, wie zuvor beschrieben, vorzugsweise motorgetrieben auf und das z.B. vertikal angeordnete Abweiser-Transportband läuft an und unterstützt dadurch die kinetische Energie des Leerguts bzw. Gebindes, welches beispielsweise längs in Richtung einer Presse bzw. Kompaktors in Fig. 3 weitergeleitet werden kann.

Wie in dem Ausführungsbeispiel in den Fig. 4, 5 und 6 gezeigt ist, ist eine Halterungseinrichtung 20 vorgesehen, beispielsweise wenigstens eine Halterungsplatte 22 und eine Verstärkungsplatte 21 wie z.B. zwei miteinander verbundene und übereinander angeordnete Metallplatten usw.. Die Halterungseinrichtung 20, z.B. die Halterungsplatte 22, ist dabei mit jeweils einem Ende der beiden Umlenkrollen 6 des Abweiser-Transportbandes 17 verbunden. Die beiden Umlenkrollen 6 sind dabei drehbar mit der Halterungseinrichtung 20 verbunden, wobei wenigstens eine der Umlenkrollen 6 durch einen ersten Motor 23, z.B. Elektromotor, antreibbar ist zum Bewegen des Abweiser-Transportbandes 17 in und entgegen der Abweiser-Transportrichtung.

Die Halterungsplatte 22 kann, wie in dem Ausführungsbeispiel in den Fig. 4, 5 und 6 gezeigt ist, beispielsweise als dreieckige Versteifungsplatte ausgebildet sein, um das Abweiser-Transportband 17 beim Ableiten von Leergut zusätzlich zu stützen oder zu versteifen. Dazu ist die Halterungsplatte 22 beispielsweise als dreieckige Versteifungsplatte ausgebildet. Die Spitze des Dreiecks der Versteifungsplatte zeigt dabei nach außen oder weg von dem Abweiser-Transportband 17, während die Umlenkrollen 6 an der der Spitze gegenüberliegenden Seite des Dreiecks angeordnet sind. Dadurch ergibt sich eine besonders stabile Befestigung der Umlenkrollen 6 und des um die Umlenkrollen 6 laufenden Endlosbands 17.

Die Halterungseinrichtung 20 ist an der dem Transportband 2 abgewandten Ende der Umlenkrollen 6 angeordnet, wie in den Fig. 4, 5 und 6 gezeigt ist. Die Halterungseinrichtung 20 kann aber ebenso alternativ an der dem Transportband 2 gegenüberliegenden Ende der Umlenkrollen 6 angeordnet sein (nicht dargestellt) oder zwei Halterungseinrichtungen (nicht dargestellt) vorgesehen werden an beiden Enden der Umlenkrollen.

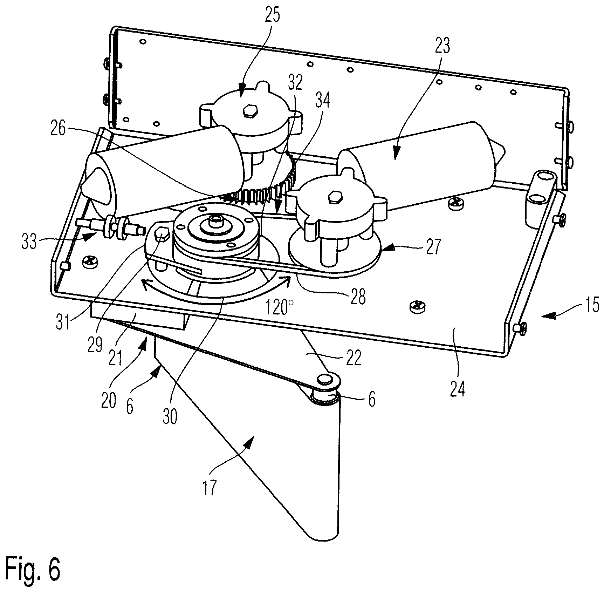

Wie in Fig. 6 gezeigt ist, ist die Halterungseinrichtung 20 und die mit ihr verbundenen Umlenkrollen 6 mit einem Befestigungsplattenelement 24 der Rücknahmevorrichtung 1 verbunden. Dabei ist, wie zuvor beschrieben, wenigstens eine der Umlenkrollen 6 mittels des ersten Motors 21 drehbar oder antreibbar zum Bewegen des Abweiser-Transportbandes 17 der Abweisereinrichtung 15 in und entgegen der Abweiser-Transportrichtung.

Zum Drehen oder Schwenken der Halterungsreinrichtung 20 und der mit ihr verbundenen Umlenkrollen 6 mit dem Abweiser-Transportband 17 in und aus dem Transportband 2 heraus ist ein zweiter Motor 25, z.B. ein Elektromotor, vorgesehen. Die ersten und zweiten Motoren 23, und 25 sind dabei in dem in Fig. 6 gezeigten Ausführungsbeispiel z.B. an dem Befestigungsplattenelement 24 der Rücknahmevorrichtung 1 vorgesehen.

Zum Drehen der wenigstens einen Umlenkrolle 6 ist die Umlenkrolle 6 mit dem ersten Motor 23 beispielsweise über eine erste Kopplungseinrichtung z.B. ein Zahnradgetriebe 26, wie in dem Ausführungsbeispiel in Fig. 6 gezeigt ist, gekoppelt. Statt eines Zahnradgetriebes 26 kann aber auch ein Riemengetriebe oder jede andere Kopplungseinrichtung vorgesehen werden, welche zum Koppeln des ersten Motors 23 und der Umlenkrolle 6 zum Drehen der Umlenkrolle 6 geeignet ist.

Zum Drehen oder Schwenken der Halterungseinrichtung 20 ist diese beispielweise mittels eines Riemengetriebes 27 als zweiter Kopplungseinrichtung mit dem zweiten Motor 25 gekoppelt, wobei als Riemen 28, z.B. aus Kunststoff, Metall oder Gummi usw., beispielsweise ein Reibriemen oder Zahnriemen usw. eingesetzt werden kann. Die Erfindung ist aber auf ein Riemengetriebe nicht beschränkt. Ebenso kann ein Zahnradgetriebe oder jede andere Kopplungseinrichtung vorgesehen werden, welche zum Koppeln des zweiten Motors 25 und der Halterungseinrichtung 20 zum Drehen oder Schwenken der Halterungseinrichtung in und aus dem Transportband 2 heraus geeignet ist.

Wahlweise zusätzlich ist, wie in dem Ausführungsbeispiel in Fig. 6 gezeigt ist, die Halterungseinrichtung 20 mit einem Anschlagelement 29 gekoppelt, beispielsweise einem mit einer Scheibe des Riemengetriebes verbundenen Bolzens. Das Anschlagelement 29 ist in einer Führungsnut 30 in dem Befestigungsplattenelement 24 geführt und wird mit der Halterungseinrichtung 20 mitgedreht. Die beiden Enden 31, 32 der Führungsnut 30 bilden dabei jeweils einen Anschlag für das Anschlagelement 29 und die mit dem Anschlagelement 29 gekoppelte Halterungseinrichtung 20 und deren Umlenkrollen 6 mit dem Endlosband 17. Dies hat den Vorteil, dass die Halterungseinrichtung 20 beispielsweise nur bis zum Erreichen einer vorbestimmten Endposition gedreht werden kann. Eine erste Endposition ist beispielsweise eine Ausgangsposition der Halterungseinrichtung 20, in welcher das Abweiser-Transportband 17 derart zu dem mit Leergut bestückbaren Transportband 2 geschwenkt ist, dass ein auf dem Transportband 2 vorhandenes Leergut darauf weiter transportiert werden kann. Dazu ist das Abweiser-Transportband 17 so angeordnet, dass es den Transport von Leergut auf dem Transportband 2 nicht behindert. Beispielsweise ist das Abweiser-Transportband 17 z.B. parallel neben oder beabstandet zu dem mit Leergut bestückbaren Transportband 2 angeordnet.

Die zweite Endposition der Führungsnut 30 ist beispielsweise die Betriebsposition der Halterungseinrichtung 20, in welcher das Abweiser-Transportband 17 derart in das mit Leergut bestückbare Transportband 2 hinein geschwenkt ist, dass ein auf dem Transportband 2 vorhandenes Leergut durch das Abweiser-Transportband 17 von dem Transportband 2 heruntergeleitet oder abgeleitet werden kann, um anschließend z.B. einer Leergutweiterverarbeitungseinrichtung zugeführt zu werden.

Durch das Anschlagelement 29 kann ein Überdrehen der Halterungseinrichtung 20 und damit ein ungewolltes Schwenken des Abweiser-Transportbands 17 über die Betriebsposition und die Ausgangsposition hinaus verhindert werden. Beispielsweise kann die Führungsnut entlang eines Kreisbogenabschnitts verlaufen und eine Drehung der Halterungseinrichtung 20 in einem Winkel zwischen 0° und 120° erlauben. Die Erfindung ist aber auf den Drehbereich von bis zu 120° nicht beschränkt. Je nach Funktion und Einsatzzwecke kann der Drehbereich, um welchen die Halterungseinrichtung und das mit ihr verbundene Abweiser-Transportband größer als 120° oder kleiner als 120° sein.

In dem in Fig. 6 gezeigten Ausführungsbeispiel ist des Weiteren wahlweise zusätzlich jeweils ein Sensor 33, 34 vorgesehen zum Erfassen der jeweiligen Endposition der Halterungseinrichtung 20. Ein erster Sensor 33 kann dabei das Erreichen der ersten Endposition des Anschlagelements 29 und der zweite Sensor 34 das Erreichen der zweiten Endposition des Anschlagelements 29 detektieren oder bestimmen.

Dadurch kann festgestellt werden, ob die Halterungseinrichtung 20 in die gewünschte Ausgangsposition oder Betriebsposition geschwenkt ist oder ob ein Fehler im Betriebsablauf aufgetreten ist, beispielsweise durch ein Verklemmen von Leergut. In diesem Fall kann beispielsweise das Abweiser-Transportband 17 und das Transportband 2 zusammen entgegen ihrer jeweiligen Transportrichtung bewegt werden oder nur eines der beiden Bänder, während das andere Band stillsteht, um so das verklemmte Leergut zu befreien.

Das Befestigungsplattenelement 24 an welchen die beiden Motoren 23, 25, Sensoren 33, 34 usw. angeordnet sind, kann dabei Teil eines Gehäuses oder Gehäuseabschnitts der Rücknahmevorrichtung 1 sein.

### Bezugszeichenliste

- 1: Rücknahmevorrichtung
- 2: Transportband
- 3: Reinigungsvorrichtung
- 4: Abschirmung
- 5: Flasche
- 6: Umlenkrolle
- 7: oberer Bandabschnitt
- 8: unterer Bandabschnitt
- 9: äußere Reinigungsrolle
- 10: innere Reinigungsrolle
- 12: Reinigungsmittelauftrageeinrichtung
- 13: Behälter
- 14: Ablauf
- 15: Abweisereinrichtung
- 16: Leergutweiterverarbeitungseinrichtung
- 17: Abweiser-Transportband
- 18: erster Bandabschnitt
- 19: zweiter Bandabschnitt
- 20: Halterungseinrichtung
- 21: Verstärkungsplatte
- 22: Halterungsplatte
- 23: erster Motor
- 24: Befestigungsplattenelement
- 25: zweiter Motor
- 26: Zahnradgetriebe
- 27: Riemengetriebe
- 28: Riemen
- 29: Anschlagelement
- 30: Führungsnut
- 31: erstes Ende
- 32: zweites Ende
- 33: erster Sensor
- 34: zweiter Sensor

## Patentansprüche

1. Rücknahmevorrichtung (1) für Leergut (5), insbesondere Kisten-, Flaschen- und/oder Dosenleergut, aufweisend:
ein Transportband (2) zum Transportieren von Leergut (5), und wenigstens eine Abweisereinrichtung (15) zum Ableiten wenigstens eines ausgewählten Leerguts (5), welches auf dem Transportband (2) in einer Transportrichtung transportiert wird, wobei die Abweisereinrichtung (15) zu der Außen- und Oberseite eines oberen Bandabschnitts (7) des Transportbandes (2) derart angeordnet ist, dass die Abweisereinrichtung (15) zwischen einer Ausgangsposition und einer Betriebsposition drehbar ist,
wobei die Abweisereinrichtung (15) in der Ausgangsposition derart gedreht ist, dass sie auf dem Transportband (2) transportiertes Leergut (5) passieren lässt, und in der Betriebsposition, auf das Transportband (2) derart gedreht ist, dass das wenigsten eine ausgewählte auf dem Transportband (2) transportierte Leergut (5) von dem Transportband herunterleitbar und entfernbar ist, während das Transportband (2) weiter in der Transportrichtung bewegbar ist, wobei die Abweisereinrichtung (15) neben dem Transportband (2) senkrecht zu der Außen- und Oberseite des oberen Bandabschnitts (7) des Transportbands (2) angeordnet ist, und wobei die Abweisereinrichtung (15) zwei Umlenkrollen (6) aufweist, auf welchen ein umlaufendes Abweiser-Transportband (17) vorgesehen ist, wobei wenigstens eine der Umlenkrollen (6) mittels eines Motors (25) zusätzlich drehbar ausgebildet ist, wobei der Motor (25) durch eine Kopplungseinrichtung (26) mit der Umlenkrolle (6) gekoppelt ist, wobei die Abweisereinrichtung (15) mittels eines weiteren Motors drehbar ist, wobei die Abweisereinrichtung (15) mit dem weiteren Motor durch eine weitere Kopplungseinrichtung (27) gekoppelt ist zum Drehen der Abweisereinrichtung (15) zwischen der Ausgangsposition und der Betriebsposition, wobei die Umlenkrollen (6) der Abweisereinrichtung (15) an wenigstens einem Ende mit einer zugeordneten Halterungseinrichtung (20) gekoppelt sind, wobei die Halterungseinrichtung (20) und die mit ihr verbundenen Umlenkrollen (6) mit einem Befestigungsplattenelement (24) verbunden ist, wobei die ersten und zweiten Motoren (23, 25) an dem Befestigungsplattenelement (24) vorgesehen sind, wobei die Halterungseinrichtung (20) mit einem Anschlagelement (29) gekoppelt ist, welches in einer Führungsnut (30) in dem Befestigungsplattenelement (24) geführt mit der Halterungseinrichtung (20) mitgedreht wird, und wobei die beiden Enden (31, 32) der Führungsnut (30) jeweils einen Anschlag für das Anschlagelement (29) bilden, wobei die Abweisereinrichtung (15) in der Ausgangposition ist, wenn das Anschlagelement (29) das eine Ende der Führungsnut (30) erreicht hat und die Abweisereinrichtung (15) in der Betriebsposition ist, wenn das Anschlagelement (29) das andere Ende der Führungsnut (30) erreicht hat.

2. Rücknahmevorrichtung nach Anspruch 1,
**dadurch gekennzeichnet,**
**dass** die Abweisereinrichtung (15) mittels eines Elektromotors drehbar ist.

3. Rücknahmevorrichtung nach Anspruch 2,
**dadurch gekennzeichnet,**
**dass** die Ausgangsposition und/oder die Betriebsposition zusätzlich durch einen zugeordneten Sensor (33, 34) detektierbar ist.

4. Rücknahmevorrichtung nach einem der vorstehenden Ansprüche,
**dadurch gekennzeichnet,**
**dass** die Halterungseinrichtung (20) eine Halterungsplatte (22) aufweist, wobei die Halterungsplatte (22) als Versteifungsplatte ausgebildet ist.

5. Rücknahmevorrichtung nach Anspruch 4,
**dadurch gekennzeichnet,**
**dass** die als Versteifungsplatte ausgebildete Halterungsplatte (22) eine dreieckige oder im Wesentlichen dreieckig Form aufweist, wobei die Spitze des Dreiecks weg von dem Abweiser-Transportband zeigt, während die Umlenkrollen (6) an der der Spitze gegenüberliegenden Seite des Dreiecks angeordnet sind.

6. Rücknahmevorrichtung nach einem der Ansprüche 4 oder 5, **dadurch gekennzeichnet,**
**dass** die Halterungseinrichtung (20) eine Verstärkungsplatte (21) aufweist, welche mit der Halterungsplatte (20) und mit der zugeordneten Kopplungseinrichtung (27) gekoppelt ist zum Drehen der Halterungseinrichtung (20) und den mit der Halterungseinrichtung (20) verbundenen Umlenkrollen (6) und deren Abweiser-Transportband (17) zwischen der Ausgangsposition und der Betriebsposition.

7. Rücknahmevorrichtung nach einem der vorstehenden Ansprüche,
**dadurch gekennzeichnet,**
**dass** das Transportband (2) als Endlosband ausgebildet ist und um wenigstens zwei Umlenkrollen (6) umlaufend angeordnet ist, wobei das Transportband (2) den oberen Bandabschnitt (7) und einen unteren Bandabschnitt (8) aufweist, wobei das Transportband (2) eine Reinigungsvorrichtung (3) aufweist zum Reinigen einer Außenseite und/oder Innenseite des unteren Bandabschnitts (8).

8. Rücknahmevorrichtung nach Anspruch 7,
**dadurch gekennzeichnet,**
**dass** das Transportband (2) durch die Reinigungsvorrichtung (3) zusätzlich vorspannbar ist.

9. Rücknahmevorrichtung nach einem der Ansprüche 7 oder 8,
**dadurch gekennzeichnet,**
**dass** die Reinigungsvorrichtung (3) wenigstens eine äußere Reinigungsrolle (9), welche an der Außenseite des unteren Bandabschnitts (8) angeordnet ist und/oder wenigstens eine innere Reinigungsrolle (11) aufweist, welche an der Innenseite des unteren Bandabschnitts (8) angeordnet ist, wobei die jeweilige Reinigungsrolle (9, 11) in Kontakt mit dem unteren Bandabschnitt (8) angeordnet oder mit dem unteren Bandabschnitt in Kontakt bringbar vorgesehen ist und wobei wenigstens eine Reinigungsrolle (9, 10) feststehend, durch einen Motor drehbar, oder durch Kontakt mit dem unteren Bandabschnitt (8) drehbar ausgebildet ist.

10. Rücknahmevorrichtung nach Anspruch 9,
**dadurch gekennzeichnet,**
**dass** die jeweilige Reinigungsrolle (9, 11) wenigstens eine Reinigungsstruktur aufweist, insbesondere eine Bürstenstruktur, eine Noppenstruktur, eine Lippen- oder Wischerlippenstruktur, eine Vliesstruktur, und/oder eine Schwammstruktur.

11. Rücknahmevorrichtung nach einem der Ansprüche 7 bis 10, **dadurch gekennzeichnet,**
**dass** die Reinigungsvorrichtung (3) wenigstens eine Reinigungsmittelauftrageeinrichtung (12) aufweist zum Auftragen eines Reinigungsmittels, insbesondere eines flüssigen Reinigungsmittels oder Reinigungsmittelnebels, wobei die Reinigungsmittelauftrageeinrichtung (12) als Düse ausgebildet ist.

12. Rücknahmevorrichtung nach einem der Ansprüche 7 bis 11, **dadurch gekennzeichnet,**
**dass** die wenigstens eine Reinigungsmittelauftrageeinrichtung (12) ihr Reinigungsmittel auf die zugeordnete Außenseite oder Innenseite des unteren Bandabschnitts (7) des Transportbandes (2) aufträgt.

13. Rücknahmevorrichtung nach einem der Ansprüche 9 bis 12, **dadurch gekennzeichnet,**
**dass** die wenigstens eine Reinigungsmittelauftrageeinrichtung (12) ihr Reinigungsmittel auf wenigstens eine zugeordnete Reinigungsrolle (9, 11) aufträgt.

14. Rücknahmevorrichtung nach einem der Ansprüche 7 bis 13, **dadurch gekennzeichnet,**
**dass** die Reinigungsvorrichtung (3) einen Behälter (13) aufweist zum Auffangen des zuvor durch die wenigstens eine Reinigungsmittelauftrageeinrichtung (12) aufgetragene Reinigungsmittels, wobei der Behälter (13) vorzugsweise wenigstens einen Ablauf (14) aufweist zum Abführen des gesammelten und insbesondere verschmutzen Reinigungsmittels, wobei der Behälter (13) fest installiert oder auswechselbar in der Rücknahmevorrichtung (1) vorgesehen ist.

15. Rücknahmevorrichtung nach Anspruch 14,
**dadurch gekennzeichnet,**
**dass** der Behälter (13) und/oder der Ablauf (14) wenigstens ein Sieb aufweist, wobei das wenigstens eine Sieb fest in dem Behälter bzw. Ablauf installiert oder austauschbar vorgesehen ist.

## Claims

1. Return device (1) for empty containers (5), in particular empty boxes, bottles and/or cans, comprising:
a transport belt (2) for transporting empty containers (5), and
at least one deflector device (15) for diverting at least one selected empty container (5) which is being transported in a transport direction on the transport belt (2),
wherein the deflector device (15) is arranged in such a way, with respect to the outer and upper face of an upper belt portion (7) of the transport belt (2), that the deflector device (15) can be rotated between a starting position and an operating position,
wherein the deflector device (15) is rotated in the starting position in such a way that it allows empty containers (5) being transported on the transport belt (2) to pass through, and is rotated onto the transport belt (2) in the operating position in such a way that at least one selected empty container (5) being transported on the transport belt (2) can be guided down from the transport belt and removed while the transport belt (2) can be moved onwards in the transport direction, the deflector device (15) being arranged alongside the transport belt (2) perpendicular to the outer and upper face of the upper belt portion (7) of the transport belt (2), and the deflector device (15) having two deflection rollers (6) on which a circulating deflector transport belt (17) is provided, at least one of the deflection rollers (6) additionally being formed to be rotatable by means of a motor (25), the motor (25) being coupled to the deflection roller (6) by a coupling device (26), the deflector device (15) being rotatable by means of a further motor, the deflector device (15) being coupled to the further motor by a further coupling device (27) to rotate the deflector device (15) between the starting position and the operating position,
the deflection rollers (6) of the deflector device (15) being coupled at at least one end to an associated mounting device (20), the mounting device (20) and the deflection rollers (6) connected thereto being connected to a fastening plate element (24), the first and second motors (23, 25) being provided on the fastening plate element (24), the mounting device (20) being coupled to a stop element (29) which is rotated together with the mounting device (20) while being guided in a guide groove (30) in the fastening plate element (24), and each of the two ends (31, 32) of the guide groove (30) forming a stop for the stop element (29), the deflector device (15) being in the starting position when the stop element (29) has reached one end of the guide groove (30) and the deflector device (15) being in the operating position when the stop element (29) has reached the other end of the guide groove (30).

2. Return device according to claim 1,
**characterised**
**in that** the deflector device (15) is rotatable by means of an electric motor.

3. Return device according to claim 2,
**characterised**
**in that** the starting position and/or the operating position can additionally be detected by an associated sensor (33, 34) .

4. Return device according to any of the preceding claims, **characterised**
**in that** the mounting device (20) has a mounting plate (22), the mounting plate (22) being formed as a reinforcing plate.

5. Return device according to claim 4,
**characterised**
**in that** the mounting plate formed as a reinforcing plate (22) is of a triangular or substantially triangular shape, the apex of the triangle pointing away from the deflector transport belt while the deflection rollers (6) are arranged on the side of the triangle opposite the apex.

6. Return device according to either claim 4 or claim 5, **characterised**
**in that** the mounting device (20) has a reinforcing plate (21) which is coupled to the mounting plate (20) and to the associated coupling device (27) to rotate the mounting device (20), the deflection rollers (6) connected to the mounting device (20), and the deflector transport belt (17) thereof between the starting position and the operating position.

7. Return device according to any of the preceding claims, **characterised**
**in that** the transport belt (2) is formed as an endless belt and is arranged circulating around at least two deflection rollers (6), the transport belt (2) having the upper belt portion (7) and a lower belt portion (8), the transport belt (2) having a cleaning device (3) for cleaning an outer face and/or inner face of the lower belt portion (8).

8. Return device according to claim 7,
**characterised**
**in that** the transport belt (2) can additionally be biased by the cleaning device (3).

9. Return device according to either claim 7 or claim 8,
**characterised**
**in that** the cleaning device (3) has at least one outer cleaning roller (9), which is arranged on the outer face of the lower belt portion (8), and/or at least one inner cleaning roller (11), which is arranged on the inner face of the lower belt portion (8), each cleaning roller (9, 11) being arranged in contact with the lower belt portion (8) or being provided so as to be able to be brought into contact with the lower belt portion, and at least one cleaning roller (9, 10) being formed to be stationary, rotatable by a motor, or rotatable by contact with the lower belt portion (8).

10. Return device according to claim 9,
**characterised**
**in that** each cleaning roller (9, 11) has at least one cleaning structure, in particular a brush structure, a nub structure, a lip or wiper lip structure, a non-woven structure and/or a sponge structure.

11. Return device according to any of claims 7 to 10,
**characterised**
**in that** the cleaning device (3) has at least one cleaning agent application device (12) for applying a cleaning agent, in particular a liquid cleaning agent or cleaning agent mist, the cleaning agent application device (12) being formed as a nozzle.

12. Return device according to any of claims 7 to 11,
**characterised**
**in that** the at least one cleaning agent application device (12) applies the cleaning agent thereof to the associated outer face or inner face of the lower belt portion (7) of the transport belt (2).

13. Return device according to any of claims 9 to 12,
**characterised**
**in that** the at least one cleaning agent application device (12) applies the cleaning agent thereof to at least one associated cleaning roller (9, 11).

14. Return device according to any of claims 7 to 13,
**characterised**
**in that** the cleaning device (3) has a container (13) to capture the cleaning agent previously applied by the at least one cleaning agent application device (12), the container (13) preferably having at least one run-off (14) for discharging the collected and in particular soiled cleaning agent, the container (13) being provided fixedly installed or provided replaceably in the return device (1).

15. Return device according to claim 14,
**characterised**
**in that** the container (13) and/or the run-off (14) has at least one sieve, the at least one sieve being provided fixedly installed in the container or run-off or being provided replaceably.

## Revendications

1. Dispositif de retour (1) pour contenants consignés (5), notamment contenants consignés de type caisse, bouteille et/ou boîte, comportant :
une bande transporteuse (2) destinées à transporter des contenants consignés (5), et au moins un organe de rejet (15) permettant de dévier au moins un contenant consigné (5) sélectionné qui est transporté sur la bande transporteuse (2) selon un sens de transport, l'organe de rejet (15) étant disposé, par rapport à la face extérieure et supérieure d'une partie supérieure de bande (7) de la bande transporteuse (2), de manière à ce que l'organe de rejet (15) puisse être tourné entre une position de départ et une position de fonctionnement,
l'organe de rejet (15) étant tourné, dans la position de départ, de manière à ce qu'il laisse passer des contenants consignés (5) qui sont transportés sur la bande transporteuse (2) et étant tourné, dans la position de fonctionnement, vers la bande transporteuse (2) de manière à ce que l'au moins un contenant consigné (5) sélectionné qui est transporté sur la bande transporteuse (2) puisse être guidé de manière à quitter ladite bande transporteuse et être enlevé alors que la bande transporteuse (2) puisse continuer à se déplacer dans le sens de transport, l'organe de rejet (15) se trouvant à côté de la bande transporteuse (2) en disposition verticale par rapport à la face extérieure et supérieure de la partie supérieure de bande (7) de la bande transporteuse (2), et l'organe de rejet (15) comportant deux poulies de renvoi (6) qui sont pourvues d'une bande transporteuse de rejet (17) périphérique, au moins une des poulies de renvoi (6) étant réalisée de manière à ce qu'elle puisse en outre être entraînée en rotation par un moteur (25), le moteur (25) étant couplé à la poulie de renvoi (6) au moyen d'un organe de couplage (26), l'organe de rejet (15) pouvant être tourné au moyen d'un moteur supplémentaire, l'organe de rejet (15) étant couplé audit moteur supplémentaire au moyen d'un organe de couplage supplémentaire (27),
permettant ainsi de tourner l'organe de rejet (15) entre la position de départ et la position de fonctionnement, les poulies de renvoi (6) de l'organe de rejet (15) étant couplées, à au moins une extrémité, à un organe de support (20) associé, l'organe de support (20) et les poulies de renvoi (6) qui y sont reliées étant reliés à un élément de plaque de fixation (24), l'élément de plaque de fixation (24) étant pourvu des premier et deuxième moteurs (23, 25), l'organe de support (20) étant couplé à un élément de butée (29) lequel est solidaire en rotation avec l'organe de support (20) tout en étant guidé, au sein de l'élément de plaque de fixation (24), dans une rainure de guidage (30),
et les deux extrémités (31, 32) de la rainure de guidage (30) formant chacune une butée destinée à l'élément de butée (29), l'organe de rejet (15) adoptant la position de départ lorsque l'élément de butée (29) a atteint l'une des extrémités de la rainure de guidage (30) et l'organe de rejet (15) adoptant la position de fonctionnement lorsque l'élément de butée (29) a atteint l'autre des extrémités de la rainure de guidage (30).

2. Dispositif de retour selon la revendication 1,
**caractérisé en ce que**
l'organe de rejet (15) peut être tourné au moyen d'un moteur électrique.

3. Dispositif de retour selon la revendication 2,
**caractérisé en ce que**
la position de départ et/ou la position de fonctionnement peut/peuvent en outre être détectée(s) par un capteur (33, 34) associé.

4. Dispositif de retour selon l'une des revendications précédentes,
**caractérisé en ce que**
l'organe de support (20) comporte une plaque de support (22), la plaque de support (22) étant réalisée sous forme d'une plaque de rigidification.

5. Dispositif de retour selon la revendication 4,
**caractérisé en ce que**
la plaque de support (22), réalisée sous forme d'une plaque de rigidification, présente une forme triangulaire ou sensiblement triangulaire, la pointe du triangle étant orientée de manière à être éloignée de la bande transporteuse de rejet alors que les poulies de renvoi (6) sont disposées sur le côté du triangle qui se trouve à l'opposé de ladite pointe.

6. Dispositif de retour selon l'une des revendications 4 ou 5,
**caractérisé en ce que**
l'organe de support (20) comporte une plaque de renforcement (21) laquelle est couplée à la plaque de support (20) et à l'organe de couplage (27) associé, permettant ainsi de tourner l'organe de support (20) et les poulies de renvoi (6) reliées à l'organe de support (20) et leur bande transporteuse de rejet (17) entre la position de départ et la position de fonctionnement.

7. Dispositif de retour selon l'une des revendications précédentes,
**caractérisé en ce que**
la bande transporteuse (2) est réalisée sous forme d'une bande sans fin tout en étant disposée de manière à qu'elle tourne autour d'au moins deux poulies de renvoi (6), la bande transporteuse (2) comportant la partie supérieure de bande (7) et une partie inférieure de bande (8), la bande transporteuse (2) comportant un dispositif de nettoyage (3) permettant de nettoyer une face extérieure et/ou face intérieure de la partie inférieure de bande (8).

8. Dispositif de retour selon la revendication 7,
**caractérisé en ce que**
le dispositif de nettoyage (3) permet en outre de tendre préalablement la bande transporteuse.

9. Dispositif de retour selon l'une des revendications 7 ou 8,
**caractérisé en ce que**
le dispositif de nettoyage (3) comporte au moins un rouleau de nettoyage extérieur (9) qui est disposé sur la face extérieure de la partie inférieure de bande (8) et/ou au moins un rouleau de nettoyage intérieur (11) qui est disposé sur la face intérieure de la partie inférieure de bande (8), le rouleau de nettoyage (9, 11) concerné étant prévu de manière à ce qu'il soit en contact avec la partie inférieure de bande (8) ou puisse être mis en en contact avec la partie inférieure de bande, et au moins un des rouleaux de nettoyage (9, 10) étant réalisé de manière qu'il soit fixe, puisse être entraîné en rotation par un moteur ou puisse être entraîné en rotation par le contact avec la partie inférieure de bande (8).

10. Dispositif de retour selon la revendication 9,
**caractérisé en ce que**
le rouleau de nettoyage (9, 11) concerné comporte au moins une structure de nettoyage, s'agissant notamment d'une structure de brosse, d'une structure de picots, d'une structure de lèvres ou de balais d'essuyage, d'une structure de non-tissé et/ou d'une structure d'éponge.

11. Dispositif de retour selon l'une des revendications 7 à 10,
**caractérisé en ce que**
le dispositif de nettoyage (3) comporte au moins un organe d'application d'agent de nettoyage (12) permettant d'appliquer un agent de nettoyage, notamment un agent de nettoyage liquide ou un agent de nettoyage nébulisé, l'organe d'application d'agent de nettoyage (12) étant réalisé sous forme d'une buse.

12. Dispositif de retour selon l'une des revendications 7 à 11,
**caractérisé en ce que**
l'au moins un organe d'application d'agent de nettoyage (12) applique son agent de nettoyage sur la face extérieure ou face intérieure associée de la partie inférieure de bande (7) de la bande transporteuse (2).

13. Dispositif de retour selon l'une des revendications 9 à 12,
**caractérisé en ce que**
l'au moins un organe d'application d'agent de nettoyage (12) applique son agent de nettoyage sur au moins un rouleau de nettoyage (9, 11) associé.

14. Dispositif de retour selon l'une des revendications 7 à 13,
**caractérisé en ce que**
le dispositif de nettoyage (3) comporte un récipient (13) permettant de recueillir l'agent de nettoyage qui a préalablement été appliqué par l'au moins un organe d'application d'agent de nettoyage (12), le récipient (13) présentant de préférence au moins une sortie (14) destinée à évacuer l'agent de nettoyage recueilli qui est notamment porteur de saletés, le récipient (13) étant prévu, au sein du dispositif de retour (1), de manière à être fixe ou à pouvoir être remplacé.

15. Dispositif de retour selon la revendication 14,
**caractérisé en ce que**
le récipient (13) et/ou la sortie (14) comporte au moins une passoire, l'au moins une passoire étant prévue, au sein du récipient ou de la sortie, de manière à être fixe ou à pouvoir être remplacée.
